Europäisches Patentamt

European Patent Office

Office européen des brevets

(19)

(11) Veröffentlichungsnummer: **0 167 004**
**B1**

(12) # EUROPÄISCHE PATENTSCHRIFT

(45) Veröffentlichungstag der Patentschrift:
16.08.89

(51) Int. Cl.⁴: **G 01 M 13/02**

(21) Anmeldenummer: **85106972.4**

(22) Anmeldetag: **05.06.85**

(54) Verspannprüfstand.

(30) Priorität: **06.07.84 DE 3424923**

(43) Veröffentlichungstag der Anmeldung:
**08.01.86 Patentblatt 86/2**

(45) Bekanntmachung des Hinweises auf die Patenterteilung:
**16.08.89 Patentblatt 89/33**

(84) Benannte Vertragsstaaten:
**DE FR GB IT**

(56) Entgegenhaltungen:
**DE-B- 1 573 682**
**DE-U- 8 208 934**
**GB-A- 2 108 683**
**US-A- 3 690 168**
**US-A- 4 294 112**

(73) Patentinhaber: **RENK AKTIENGESELLSCHAFT,**
**Gögginger Strasse 71 - 83, D-8900 Augsburg (DE)**

(72) Erfinder: **Kugler, Artur, A.-Droste-Hülshoff-Strasse 28,**
**D-8900 Augsburg (DE)**
Erfinder: **Roth, Anton, Südstrasse 20,**
**D-8901 Stadtbergen (DE)**

ACTORUM AG

## Beschreibung

Die Erfindung betrifft einen Verspannprüfstand für drehmomentübertragende Bauteile, mit zwei mit Abstand voneinander angeordneten Getrieben, mit mindestens zwei Verbindungssträngen, welche die beiden Getriebe miteinander verbinden und über die Getriebe einen in sich geschlossenen Energiekreis bilden, wobei mindestens einer der Verbindungsstränge zur Aufnahme eines Prüflings ausgebildet ist oder durch einen Prüfling gebildet ist, und mit mindestens einer Verspannkupplung zur Dreh-Verspannung des Energiekreises.

Solche Verspannprüfstände sind aus der DE-OS 15 73 682, der US-A 2 981 103 und den Seiten 239 bis 242 der Zeitschrift ATZ, Jahrgang 1963, Heft 8, August 1961, bekannt. Ferner zeigt die DE-OS 15 73 682 einen Verspannprüfstand, bei welchem die Getriebe achsversetzt zueinander angeordnet sind, so daß die Gelenkteile der zu prüfenden Gelenkwellen mit einem bestimmten Knickwinkel umlaufen. Aus der US-A 3 690 168 ist ein Verspannprüfstand bekannt, bei welchem ein Verspannelement einer Verspannkupplung axial an ein Zahnrad eines der Getriebe angeschraubt ist. Ein axial in dem Verspannelement untergebrachtes weiteres Verspannelement sitzt auf einer durch das Zahnrad hindurchgehenden Zentralwelle, auf welchem das Zahnrad drehbar gelagert ist. Die Zentralwelle ist über ein Kardangelenk mit einem der Verbindungsstränge verbunden. Zwischen den beiden Verspannelementen sind Druckkammern gebildet, durch deren Druckbeaufschlagung die beiden Verspannelemente drehverspannt werden können.

Drehmomentübertragende Bauteile, die mit einem Verspannprüfstand geprüft werden können, können Wellen, Kupplungen. Gelenke, Zahnräder und ähnliche Bauteile sein. Sie sollen auf dem Verspannprüfstand während eines Probelaufes mit wechselnden Belastungen nach einem bestimmten Prüfprogramm beaufschlagt werden. Dabei sollen die Bauteile im wesentlichen so belastet werden, wie sie auch in der Praxis später belastet werden.

Auf dem Verspannprüfstand werden die zu prüfenden Bauteile durch Verspannung mit einem bestimmten Drehmoment belastet, das sehr hoch sein kann. Dagegen ist die Antriebsleistung zum Drehen des zu prüfenden Bauteils verhältnismäßig klein. Das Drehmoment kann dabei schon im Stillstand des Bauteiles aufgebracht werden. Ferner kann das Drehmoment bei rotierendem Bauteil in beiden Verspannungsrichtungen beliebig verändert werden.

Durch die Erfindung soll die Aufgabe gelöst werden, einen Verspannprüfstand zu schaffen, mit welchem extrem schnelle Drehmomentänderungen, Drehzahländerungen und Drehrichtungsänderungen, wie sie beispielsweise bei Beschleunigungsvorgängen und Bremsvorgängen sowie Getriebeschaltungsvorgängen in Kraftfahrzeugen vorkommen. entsprechend den Sollwerten eines Prüfprogrammes auf ein zu prüfendes Bauteil aufbringbar sind. wobei diese Belastungen des Bauteiles weitgehend wirklichkeitsgetreu simuliert werden sollen.

Diese Aufgabe wird gemäss der Erfindung nach dem Anspruch gelöst. Damit wird eine kompakte Bauweise erzielt. Das von der Verspannkupplung aufgebrachte Drehmoment wirkt auf kürzestem Übertragungsweg auf das zu prüfende Bauteil und über das Zahnrad auch auf die benachbarten, mit ihm in Eingriff stehenden Zahnräder der Getriebe. Die Rotationsteile des Verspannprüfstandes nach der Erfindung können extrem massenarm und biegesteif ausgebildet sein. Dadurch können Drehzahl, Drehrichtung und Drehmoment und Drehmomentrichtung des zu prüfenden Bauteiles schnell verändert werden. Ferner kann das Bauteil mit sehr hohen Drehzahlen in beiden Drehrichtungen geprüft werden, beispielsweise für Auto-Bauteile innerhalb eines Drehzahlbereiches von 0 bis 8000 U/min in beiden Drehrichtungen. Ein besonderer Vorteil ist, daß auch extrem kurzzeitige Stöße und hochfrequente Schwingungen erzeugt und unverfälscht auf das zu prüfende Bauteil übertragen werden können. Des weiteren ermöglicht es die Erfindung, in jedem Verbindungsstrang einen oder mehrere Bauteile gleichzeitig zu prüfen. Auch bei hohen Drehzahlen besteht nicht die Gefahr, daß nachteilige Biegeschwingungen auftreten. Der konstruktive Aufbau des Verspannprüfstandes ist einfach, da Lager und Gehäuse sowie Hohlwellen völlig entfallen.

Weitere Merkmale der Erfindung sind in den abhängigen Ansprüchen enthalten.

Mehrere Ausführungsformen der Erfindung werden im folgenden mit Bezug auf die Zeichnungen als Beispiele beschrieben. Darin zeigen

Fig. 1 schematisch einen Verspannprüfstand nach der Erfindung,

Fig. 2 schematisch eine weitere Ausführungsform eines Verspannprüfstandes nach der Erfindung.

Fig. 3 einen Radialschnitt eines Zahnrades mit Verspannkupplung der Verspannprüfstände der Fig. 1 und 2,

Fig. 4 einen Axialschnitt des Zahnrades mit Verspannkupplung längs der Schnittebene IV–IV von Fig. 3,

Fig. 5 einen segmentartigen Ausschnitt einer besonderen Ausbildung eines Zahnrades mit darin untergebrachter Verspannkupplung nach der Erfindung,

Fig. 6 einen Axialschnitt längst der Ebene VI–VI von Fig. 5, und

Fig. 7 einen Axialschnitt längs der Ebene VII–VII von Fig. 5.

Für alle Ausführungsformen sind in den Zeichnungen die gleichen Bezugszahlen verwendet worden, soweit die betreffenden Teile einander funktionsmässig entsprechen.

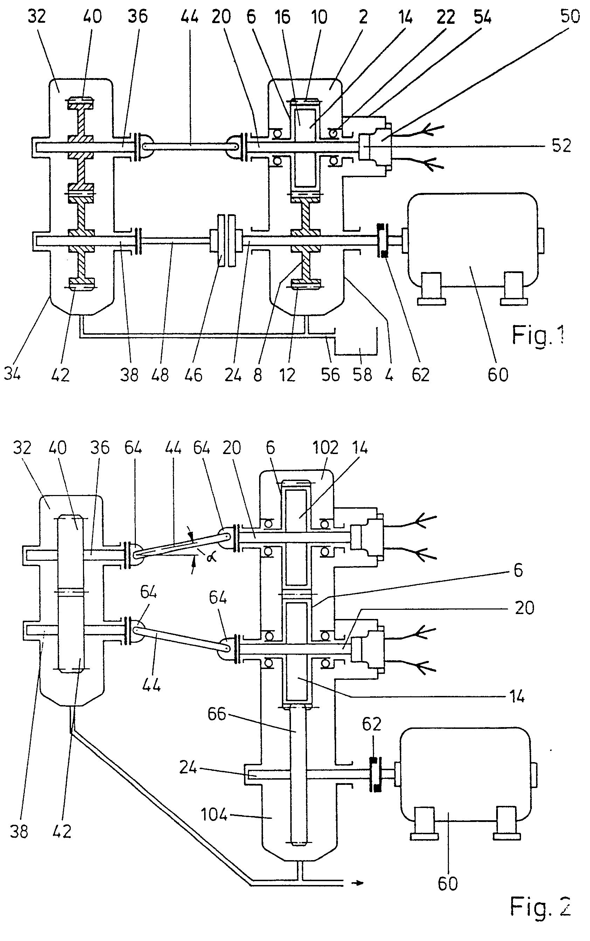

Der in Fig. 1 dargestellte Verspannprüfstand enthält ein erstes Umlenkgetriebe 2 mit einem Gehäuse 4 und zwei darin gelagerten Zahnrädern 6 und 8, deren Zahnkränze 10 und 12 miteinander in Eingriff sind. In das eine Zahnrad 6 ist eine Verspannkupplung 14 integriert. Das eine Zahnrad 6 ist Bestandteil der Verspannkupplung 14 und bildet, in Form eines äusseren Kupplungsteils, ein Verspannelement der Verspannkupplung 14. Ein innerer Teil 16 der Verspannkupplung 14 bildet ein weiteres Verspannelement der Verspannkupplung. welches gegenüber dem einen Verspannelement wechselweise in der einen oder in der anderen Drehrichtung verspannbar ist und auf einer Zentralwelle 20 sitzt. Das eine Zahnrad 6 ist durch Lager 22 im Getriebegehäuse 4 gelagert. Die Zentralwelle 20 ist durch das Lager 22 hindurchgeführt und ragt auf beiden Seiten aus dem Getriebegehäuse 4 hinaus.

Das andere Zahnrad 8 sitzt auf einer Zentralwelle 24, die ebenfalls auf beiden Seiten aus dem Getriebegehäuse 4 herausragt.

Ein weiteres Getriebe 32 besitzt ein Getriebegehäuse 34 mit achsparallel darin gelagerten Wellen 36 und 38, die nach der einen Seite aus dem Getriebegehäuse 34 herausragen, achsparallel zueinander angeordnet sind und auf ihnen drehfest angeordnete Zahnräder 40 und 42 tragen, deren Zahnkränze miteinander in Eingriff sind. Die beiden Zentralwellen 20 und 24 des einen Getriebes 2 fluchten mit den Wellen 36 und 38 des anderen Getriebes 34 und sind mit diesen über Verbindungsstränge 44 und 46 verbunden, von denen der eine 44 ein zu prüfendes Bauteil in Form einer Gelenkwelle ist und von denen der andere 46 eine zu prüfende elastische Kupplung ist, die über geeignete Anschlußelemente 48 mit den Wellen 24 und 38 verbunden ist. Dadurch bilden die Verbindungsstränge 44 und 46 über die beiden Getriebe 2 und 32 einen in sich geschlossenen Energiekreislauf.

Die beiden Verspannelemente 6 in Form des einen Zahnrades und 16 sind durch in Umfangsrichtung wirkende Druckkammer gegenseitig dreh-verspannbar. Als Druckmittel für die Druckkammer dient vorzugsweise unter Druck stehendes Öl. Die Zufuhr des Drucköls erfolgt von einem am Getriebegehäuse 4 feststehend angebrachten Zufuhrteil 50 zu einem an der Zentralwelle 20 drehfest angebrachten rotierenden Teil 52 und von diesem durch die Zentralwelle 20 zu den Druckkammern. Der feststehende Teil 50 ist flüssigkeitsdicht in einem Gehäuseteil 54 untergebracht, dessen Innenraum mit dem Inneren des Getriebegehäuses 4 in Verbindung steht. Dadurch ergibt sich der Vorteil, daß entweichendes Öl – Lecköl – der Ölzuführungseinheit 50, 52 sowie der Verspannkupplung 14 und auch das Schmieröl der beiden Getriebe 2 und 32 über eine einzige Leckölleitung 56 in einen gemeinsamen Tank 58 und von dort in den Ölkreislauf zurückfließen können.

Der Antrieb des Verspannprüfstandes erfolgt durch einen Elektromotor 60, welcher über eine Kupplung 62 an die Zentralwelle 24 des anderen Zahnrades 8 angeschlossen ist.

Fig. 2 zeigt eine weitere Ausführungsform eines Verspannprüfstandes zur Prüfung von Gelenkwellen 44 in beiden Verbindungssträngen. Bei dieser Ausführungsform enthält das eine Getriebe 102 zwei miteinander in Eingriff stehende Zahnräder 6 mit zueinander parallelen Zentralwellen 20 in einem Getriebegehäuse 104. In die beiden Zahnräder 6 sind wie bei der Ausführungsform von Fig. 1 Verspannkupplungen 14 integriert. Die beiden Zentralwellen 20 haben einen größeren Achsabstand voneinander als die beiden Wellen 36 und 38 des weiteren Getriebes 32, so daß die, die Prüfstrecken bildenden, zu prüfenden Bauteile in Form der Gelenkwellen 44 unter einem bestimmten Winkel α schräg zu den mit ihnen verbundenen Wellen 36 und 20 sowie 38 und 20 verlaufen. Dadurch sind die Gelenkteile 64 der Gelenkwellen ständigen Winkelbewegungen ausgesetzt, wenn der durch die Gelenkwellen 44 und die beiden Getriebe 102 und 32 gebildete Energiekreis vom Elektromotor 60 über die Kupplung 62 und ein Antriebszahnrad 66 angetrieben wird. Das Antriebszahnrad 66 sitzt auf einer im Getriebegehäuse 104 gelagerten Zentralwelle 24 und ist mit einem der beiden Zahnräder 6 in Eingriff, die ihrerseits ebenfalls miteinander in Eingriff sind.

Durch die Verwendung von zwei Verspannkupplungen 14 innerhalb eines Getriebes 2 oder 102 können wesentlich größere Verdrehwinkel erzeugt werden, als bei Verwendung von nur einer einzigen Verspannkupplung. Dies ist bei Bauteilen, die geprüft werden sollen und eine große Drehelastizität haben, von großer Bedeutung. Noch größere Verdrehwinkel können erzeugt werden, wenn auch die Zahnräder 40 und 42 des anderen Getriebes 32 in gleicher Weise mit in diese Zahnräder integrierten Verspannkupplungen versehen werden.

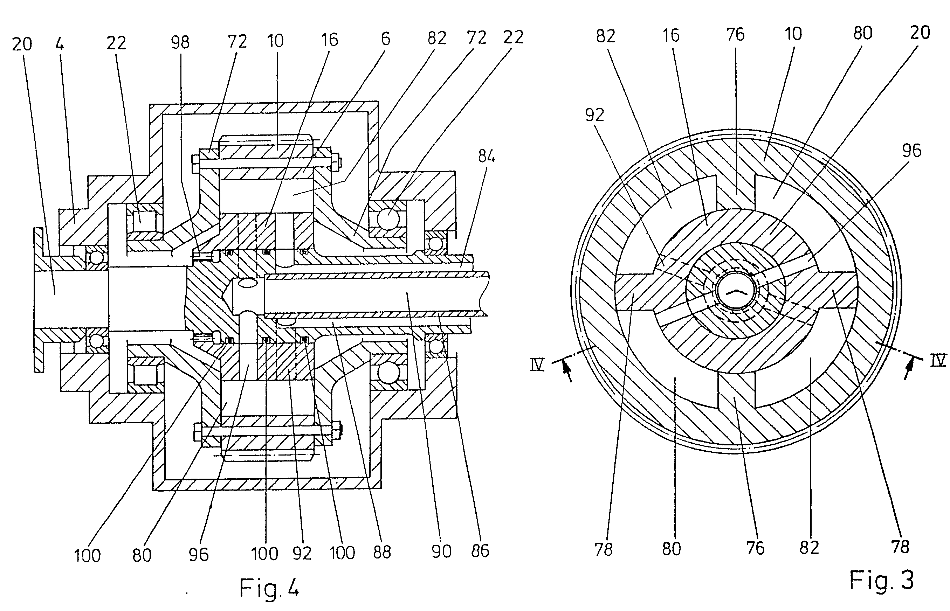

Im folgenden wird mit Bezug auf die Fig. 3 bis 6 eine bevorzugte Ausführungsform einer Verspannkupplung für die Verspannprüfstände der Fig. 1 und 2 beschrieben. Dabei wird zunächst auf die Fig. 3 und 4 Bezug genommen. Daraus geht hervor, daß das eine Zahnrad 6 aus einem Zahnkranz 10 mit Außenverzahnung und zwei Seitenscheiben 72 besteht. Dieses Zahnrad 6 ist durch Lager 22 im Getriebegehäuse 4 von Fig. 1 (oder 104 von Fig. 2) gelagert. Das Zahnrad 6 ist als radial außenliegendes Verspannelement der Verspannkupplung 14 ausgebildet, welches mit dem radial innerhalb davon axial angeordneten weiteren Verspannelement 16 zusammenwirkt. Das innere Verspannelement 16 ist in beiden Drehrichtungen relativ zum radial außerhalb gelegenen einen Verspannelement, welches durch das Zahnrad 6 gebildet ist, verdrehbar. Zu diesem Zwecke ist das durch das Zahnrad 6 gebildete eine Verspannelement mit radial nach innen ragenden Flügeln 76 und das andere, innen gelegene Verspannelement 16 mit radial nach außen gerichteten Flügeln 78 versehen. Die Flügel 76 und 78 bilden in entgegengesetzten Drehrichtungen Wände von dazwischen liegenden Druckkammern 80 und 82. Durch die Verwendung von je mindestens einer Druckkammer 80 und einer Druckkammer 82 kann durch wechselweise Beaufschlagung jeweils einer dieser beiden Druckkammern 80 oder 82 das äußere Verspannelement in Form des Zahnrades 6 wechselweise in der einen oder in der anderen Drehrichtung relativ zum inneren Verspannelement 16 verspannt werden. Bei der aus Fig. 3 ersichtlichen Ausführungsform sind je zwei Druckkammern 80 und zwei Druckkammern 82 einander diametral gegenüberliegend angeordnet, wobei jeweils ein Flügel 76 und ein Flügel 78 die beiden die Kammern in Umfangsrichtung begrenzenden Wände bilden. Somit wirken die Druckkammern 80 in der einen Verspannungsrichtung und die Druckkammern 82 in der entgegengesetzten Verspannungsrichtung. Das innere Verspannelement 16 sitzt drehfest auf der Zentralwelle 20. Die Zentralwelle 20 ist mit einer Axialbohrung 84 versehen, in welcher mit radialem Abstand ein Rohr 86 koaxial untergebracht ist. Dadurch sind in der Zentralwelle 20 zwei zueinander koaxiale, axial verlaufende Kanäle 88 und 90 gebildet.

Im inneren Verspannelement 16 sind weitere Kanäle 92 und 96 durch im wesentlichen radial verlaufende Bohrungen gebildet, welche in Axialrichtung nacheinander angeordnet sind. Der Kanal 88 der Zentralwelle 20 hat über die radialen Kanäle 92 des inneren Verspannelements 16 Strömungsverbindung zu den Druckkammern 82. Der Kanal 90 der Zentralwelle 20 hat über die radialen Kanäle 96 des inneren Verspannelements 16 Strömungsmittelverbindung zu den Druckkammern 80.

Zur Erzielung einer wirksamen Abdichtung mit geringen Leckverlusten muß das innere Verspannelement 16 mit sehr kleinem Spiel in dem als äußerster Spannelement wirkenden Zahnrad 6 geführt sein. Eine starre Verbindung zwischen der Zentralwelle 20 und dem inneren Verspannelement 16 würde bei Verlagerungen der einzelnen Teile zueinander zum Klemmen der Teile 6 und 16 und damit zu Funktionsstörungen führen. Verlagerungen können durch Zahnkräfte im Zahnkranz 10 des als Verspannelement dienenden Zahnrades 6, ferner auch durch Unwuchtkräfte des zu prüfenden Bauteils 44, sowie durch andere äußere Einflüsse auftreten. Um diesen Mangel mit Sicherheit auszuschließen, ist die Zentralwelle 20 über eine Zahnkupplung 98 mit dem inneren Verspannelement 16 gelenkig, jedoch drehfest verbunden.

Die zur Zuführung von Drucköl dienenden Kanäle 88 und 90 der Zentralwelle 20 können wegen der konzentrischen Anordnung zueinander einen großen Strömungsquerschnitt haben. Ein weiterer Vorteil ergibt sich dadurch, daß die im wesentlichen radial verlaufenden Kanäle 92 und 96 des inneren Verspannelements 16 in Axialrichtung hintereinander angeordnet sind. Dadurch können zwischen Zentralwelle 20 und innerem Verspannelement 16 Hochdruck-Dichtungselemente 100 angeordnet werden, welche den zwischen den Teilen 16 und 20 für eine große Relativbewegung zwischen diesen beiden Teilen erforderlichen großen Spalt dicht abschließen.

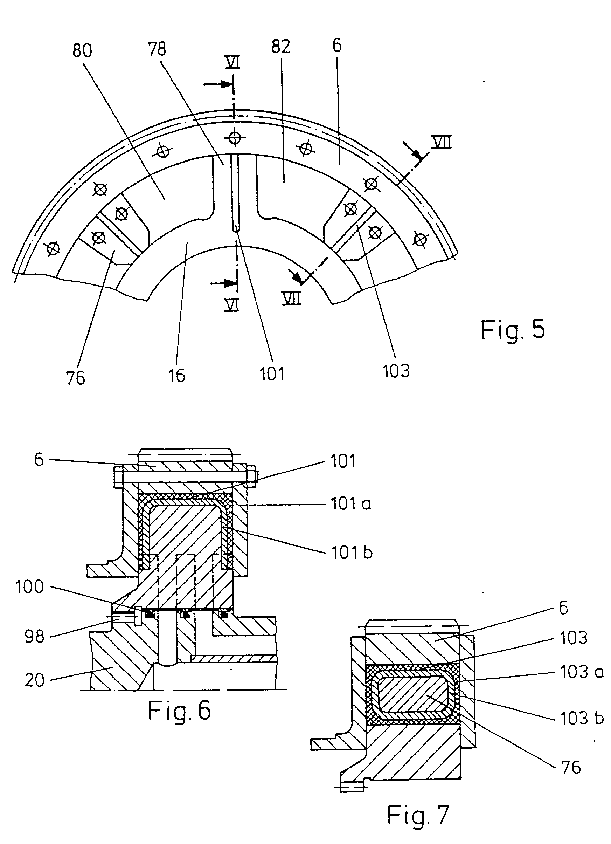

Die Fig. 5, 6 und 7 zeigen eine besonders vorteilhafte Möglichkeit zur Abdichtung der Druckkammern 80 und 82. Zur Reduzierung der Leckverluste, auch bei sehr hohen Öldrücken von beispielsweise 100 bis 300 bar, sind in den Flügeln 78 des inneren Verspannelements 16 und in den Flügeln 76 des als äußeres Verspannelement wirkenden Zahnrades 6 Hochdruckdichtungen 101 und 103 in entsprechenden Nuten eingelegt. Die Hochdruckdichtung 101 für das innere Verspannelement 16 besteht aus einem U-förmigen Teil 101a aus gleitfähigem Kunststoff, das im Zahnrad 6 gleitet, und einer darunterliegenden Dichtungsschnur 101b, die infolge konstruktiver Vorspannung dichtend zusammengepreßt wird. In Nuten der Flügel 76 des Zahnrades 6 liegen die ähnlich aufgebauten rechteckförmigen Hochdruckdichtungen 103, die aus einem Außenteil 103a und einer Rundschnur 103b zusammengesetzt sind.

Der Spalt zwischen Zentralwelle 20 und innerem Verspannelement 16, der zur Sicherstellung der Bewegungsfreiheit dieses inneren Verspannelementes 16 eine bestimmte Größe nicht unterschreiten darf, kann durch handelsübliche Dichtungselemente 100 abgedichtet sein, die für hohe Drücke geeignet sind.

## Patentansprüche

1. Verspannprüfstand für drehmomentübertragende Bauteile, mit zwei mit Abstand voneinander angeordneten Getrieben (2, 32; 102), mit mindestens zwei Verbindungssträngen (44, 48), welche die beiden Getriebe miteinander verbinden und über die Getriebe einen in sich geschlossenen Energiekreis bilden, wobei mindestens einer der Verbindungsstränge zur Aufnahme eines Prüflings ausgebildet ist, oder durch einen Prüfling gebildet ist, und mit mindestens einer Verspannkupplung (14) zur Dreh-Verspannung des Energiekreises, dadurch gekennzeichnet, daß die Verspannkupplung (14) durch ein Zahnrad (6) eines der Getriebe (2, 32; 102) gebildet ist, indem koaxial im Zahnrad (6) ein durch Relativverdrehung gegenüber diesem Zahnrad verdrehbares Verspannelement (16) der Verspannkupplung (14) und Druckkammern (80, 82) zur Erzeugung eines Verspannmomentes untergebracht sind, und indem ein Teil (10) des Zahnrades (6) als ein weiteres Verspannelement ausgebildet ist und mit dem einen Verspannelement (16) zusammenwirkt.

2. Verspannprüfstand nach Anspruch 1, dadurch gekennzeichnet, daß das eine Verspannelement (16) und das Zahnrad (6) in einem gemeinsamen Getriebegehäuse (4; 104) gelagert sind.

3. Verspannprüfstand nach Anspruch 1, dadurch gekennzeichnet, daß das eine Verspannelement (16) über eine Zahnkupplung (98) mit einer Zentralwelle (20) gelenkig und drehfest verbunden ist.

4. Verspannprüfstand nach Anspruch 3, dadurch gekennzeichnet, daß die Zentralwelle (20) und das Zahnrad (6) in einem gemeinsamen Getriebegehäuse (4; 104) gelagert sind.

5. Verspannprüfstand nach einem der Ansprüche 1 bis 4, dadurch gekennzeichnet, daß die Druckkammern (80, 82) zwischen dem Verspannelement (16) und dem Zahnrad (6) liegen und in entgegengesetzten Drehrichtungen von deren Wände (76, 78) begrenzt sind.

6. Verspannprüfstand nach einem der Ansprüche 3 bis 5, dadurch gekennzeichnet, daß in der Zentralwelle (20) Kanäle (88, 90) gebildet sind, die über Kanäle (92, 96) des Verspannelements (16) mit den Druckkammern (80, 82) störmungsmäßig verbunden sind.

7. Verspannprüfstand nach Anspruch 6, dadurch gekennzeichnet, daß die Kanäle (88, 90) der Zentralwelle (20) zwei koaxial zueinander verlaufende Kanäle sind, daß die Kanäle (92, 96) des Spannelements (16) im wesentlichen radial verlaufen und in Axialrichtung gesehen hintereinander angeordnet sind, und daß ein Kanal (88) der Zentralwelle (20) über mindestens einen Kanal (92) des Verspannelements (16) mit einer der Druckkammern (82) und der andere Kanal (90) der Zentralwelle (20) über mindestens einen anderen der Kanäle (96) des Verspannelements mit einer anderen der Druckkammern (80) strömungsmäßig verbunden ist.

8. Verspannprüfstand nach einem der Ansprüche 1 bis 7, dadurch gekennzeichnet, daß das Verspannelement (16) koaxial innerhalb des Zahnrades (6) angeordnet und geführt ist.

9. Verspannprüfstand nach einem der Ansprüche

1 bis 8, dadurch gekennzeichnet, daß die Getriebe (102, 32) unterschiedliche Achsabstände haben, und daß mindestens einer der Verbindungstränge (44) über Gelenke (64) mit den Zahnrädern der Getriebe verbunden ist, derart, daß die Teile der Gelenke unter einem Knickwinkel von weniger als 180 Grad zueinander angeordnet umlaufen.

## Claims

1, Dynamic torque-applying testing stand for torque-transmitting members with two gear systems (2, 32; 102) arranged spaced from each other, with at least two elongate connecting lines (44, 48) which connect the two gear systems to each other and which constitute by way of the gear systems a closed energy circuit, wherein at least one of the elongate connecting lines is designed to receive a test specimen, or is formed as a test specimen, and has at least one dynamic torque-applying coupling (14) for the rotational application of torque to the energy circuit, characterised in that the dynamic torque-applying coupling (14) is formed by a gearwheel (6) of one of the gear systems (2, 32; 102), while coaxially within the gearwheel (6) are mounted both one dynamic torque-applying element (16) of the dynamic torque-applying coupling (14) which is rotatable relative to the said gearwheel by relative rotation and also pressure chambers (80, 82) for the production of a dynamic torque-applying moment, and wherein one part (10) of the gearwheel (6) is formed as a further dynamic torque-applying element and cooperates with said one dynamic torque-applying element (16).

2. Dynamic torque-applying testing stand according to claim 1, characterised in that said one dynamic torque-applying element (16) and the gearwheel (6) are mounted in a common gear housing (4; 104).

3. Dynamic torque-applying testing stand according to claim 1, characterised in that said one dynamic torque-applying element (16) is connected in an articulated manner by way of a gear coupling (98) with a central shaft (20) for fixed rotation therewith.

4. Dynamic torque-applying testing stand according to claim 3, characterised in that the central shaft (20) and the gearwheel (6) are mounted in a common gear housing (4; 104).

5. Dynamic torque-applying testing stand according to one of claims 1 to 4, characterised in that the pressure chambers (80, 82) lie between said one dynamic torque-applying element (16) and the gearwheel (6) and are delimited in the respective opposed directions of rotation by the walls (76, 78) of said element and gearwheel.

6. Dynamic torque-applying testing stand according to one of claims 3 to 5, characterised in that in the central shaft (20) there are formed passages (88, 90) which are in fluid communication by way of passages (92, 96) of the dynamic torque-applying element (16) with the pressure chambers (80, 82).

7. Dynamic torque-applying testing stand according to claim 6, characterised in that the passages (88, 90) in the central shaft (20) are two coaxially extending passages, the passages (92, 96) of the dynamic torque-applying element (16) extend substantially radially and are arranged one behind the other viewed in the axial direction, and one passage (88) in the central shaft (20) is in fluid communication by means of at least one passage (92) of the dynamic torque-applying element (16) with one of the pressure chambers (82) and the other passage (90) in the central shaft (20) is in fluid communication by way of at least another of the passages (96) of the dynamic torque-applying element with another of the pressure chambers (80).

8. Dynamic torque-applying testing stand according to one of claims 1 to 7, characterised in that the dynamic torque-applying element (16) is arranged and guided coaxially within the gearwheel (6).

9. Dynamic torque-applying testing stand according to one of claims 1 to 8, characterised in that the gear systems (102, 32) have different distances between their axes, and in that at least one of the connecting lines (44) is connected by way of link means (64) with the gearwheels of the gear systems in such a way that the parts of the link means revolve relative to each other through a hinge angle of less than 180°.

## Revendications

1. Banc d'essai de déformation pour des pièces de transmission des couples, comprenant deux engrenages (2, 32; 102) disposés à distance l'un de l'autre, comprenant au moins deux branches de liaison (44, 48) qui relient entre eux les deux engrenages et qui constituent à travers les engrenages un circuit énergétique fermé sur lui-même, l'une au moins des branches de liaison étant apte à recevoir une éprouvette ou étant constituée par une éprouvette, et comprenant au moins un accouplement de déformation (14) pour engendrer une torsion dans le circuit énergétique, caractérisé par le fait que l'accouplement de déformation (14) est constitué par une roue dentée (6) de l'un des engrenages (2. 32; 102), du fait que sont logés dans la roue dentée (6), de manière coaxiale, un élément de déformation (16) de l'accouplement de déformation (14), lequel peut être déformé par torsion relative par rapport à cette roue dentée, et des chambres de compression (80, 82) destinées à engendrer un couple de torsion. et du fait qu'une partie (10) de la roue dentée (6) est réalisée sous la forme d'un autre élément de déformation et coopère avec le premier élément de déformation (16).

2. Banc d'essai de déformation selon la revendication 1, caractérisé par le fait que le premier élément de déformation (16) et la roue dentée (6) sont montés tournants dans un carter d'engrenage commun (4; 104).

3. Banc d'essai de déformation selon la revendication 1, caractérisé par le fait que le premier élément de déformation (16) est relié à un arbre central (20) par l'intermédiaire d'un accouplement denté (98), de manière articulée et fixe en rotation.

4. Banc d'essai de déformation selon la revendication 3, caractérisé par le fait que l'arbre central (20) et la roue dentée (6) sont montés tournants dans un carter d'engrenage commun (4: 104).

5. Banc d'essai de déformation selon l'une des revendications 1 à 4. caractérisé par le fait que les chambres de compression (80, 82) se trouvent entre l'élément de déformation (16) et la roue dentée (6), et sont délimitées dans des sens de rotation opposés par les parois (76, 78) de celle-ci.

6. Banc d'essai de déformation selon l'une des revendications 3 à 5, caractérisé par le fait que sont formés dans l'arbre central (20) des canaux (88, 80) qui sont reliés aux chambres de compression (80, 82), en ce qui concerne l'écoulement, par l'intermédiaire de canaux (92, 96) de l'élément de déformation (16).

7. Banc d'essai de déformation selon la revendication 6, caractérisé par le fait que les canaux (88, 90) de l'arbre central (20) sont deux canaux qui s'étendent de manière coaxiale l'un par rapport à l'autre, par le fait que les canaux (92, 96) de l'élément de déformation (16) s'étendent radialement, pour l'essentiel, et sont disposés l'un derrière l'autre dans la direction axiale, et par le fait qu'un canal (88) de l'arbre central (20) est relié, en ce qui concerne l'écoulement, à l'une des chambres de compression (82) par l'intermédiaire d'au moins un canal (92) de l'élément de déformation (16), et que l'autre canal (90) de l'arbre central (20) est relié à l'autre (80) des chambres de compression par l'intermédiaire d'au moins un autre (96) des canaux de l'élément de déformation.

8. Banc d'essai de déformation selon l'une des revendications 1 à 7, caractérisé par le fait que l'élément de déformation (16) est disposé et guidé co-axialement à l'intérieur de la roue dentée (6).

9. Banc d'essai de déformation selon l'une des revendications 1 à 8, caractérisé par les faits que les engrenages (102, 32) présentent des distances différentes entre leurs axes, et par le fait qu'au moins l'une (44) des branches de liaison est reliée par des articulations (64) aux roues dentées des engrenages, et ce, de telle façon que les parties des articulations tournent en étant disposées l'une par rapport à l'autre sous un angle inférieur à 180°.

1/3

0167004

Fig.1

Fig.2

0167004

Fig.3

Fig.4

Fig. 5

Fig. 6

Fig. 7